# EUROPEAN PATENT APPLICATION

(11) **EP 3 247 024 A1**
(43) Date of publication of application: **22.11.2017**
(21) Application number: 16170516.5
(22) Date of filing: 20.05.2016
(51) Int. Cl.: H02K 3/28

(54) **A STATOR WINDING ARRANGEMENT**

(71) Applicant: General Electric Technology GmbH, 5400 Baden (CH)
(72) Inventor: HALDEMANN, Johann, 5400 Baden (CH); SCHERF, Gunter, 5400 Baden (CH)
(74) Representative: General Electric Technology GmbH

(57) **Abstract**

The present disclosure relates to a stator winding arrangement and to a turbogenerator with such a stator winding arrangement, in particular to a stator winding arrangement and turbogenerator with phase rings connecting turns of the stator winding with terminals. It is an object of the invention to provide a stator winding arrangement and a turbogenerator with a space-saving and power efficient phase ring arrangement having three parallel stator winding circuits. Disclosed is a stator winding arrangement for a stator of a generator and a turbogenerator with such an arrangement, whereas the stator winding arrangement is composed of three electric circuits arranged in parallel, and a multitude of phase rings which terminate the electric circuits of the stator winding arrangement, whereas a third electric coil of the first circuit and a first electric coil of the first circuit of a first pole are inter-connected with a phase ring and a third electric coil of the third circuit and a first electric coil of the third circuit of a second pole are inter-connected with another phase ring.

## Description

### TECHNICAL FIELD

The present disclosure relates to a stator winding arrangement and to a turbogenerator with such a stator winding arrangement, in particular to a stator winding arrangement and turbogenerator with phase rings connecting turns of the stator winding with terminals.

### BACKGROUND

Turbogenerators are high power generators driven by a turbine, also referred to as turbine generators, in the industrial field for public power supply. In this disclosure, the turbogenerator is a synchronous machine with two poles which generates a three phase current. The stator and the rotor of these turbogenerators are provided with slots in which the turns of coils forming the whole winding are arranged. Here, the stator windings are described. The windings are arranged in two layers, an upper and a lower layer within the slots, which layers are composed of conductor bars. The end parts of the winding bars, also referred to as end windings, project out of the slots in a bended manner. Further, the winding consists of three parallel electric circuits in this disclosure. The three parallel electric circuits are routed through the whole winding. In order to suppress circulating currents between the parallel electric circuits the outer parallel coils of both poles are connected crosswise, e.g. in the state of the art the series connections between the two poles of the turbogenerator are twisted accordingly. This twisting is done such that a first coil of a phase of the first pole becomes a third coil of the second pole, a second coil of a phase of the first pole becomes a second coil of the second pole, whereas the middle parallel coils are not twisted, and a third coil of a phase of the first pole becomes a first coil of the second pole. Such arrangements of electric circuits of the stator windings need many connections. For each phase a triple connection from the terminals to the first pole, a triple called series connection from pole to pole and a triple connection of the second pole back to the terminals has to be arranged. The connectors are referred to as phase rings. This leads for example to an arrangement of twelve (3*4) phase ring path positions. To terminate all of the electric circuits of the windings of such a turbogenerator a multitude of arrangements of such phase rings is provided. Due to the fact that three electric circuits are present three times the number of phase rings compared to a winding consisting of one parallel circuit are needed on the connection side of the turbogenerator. The connection devices or connectors for the terminals, referred to as phase rings, require much space and also cause power losses.

### SUMMARY

It is an object of the invention to provide a stator winding arrangement and a turbogenerator with a space-saving and power efficient phase ring arrangement having three parallel stator winding circuits.

This object is solved with the features of a stator winding arrangement and a turbogenerator according to the independent claims.

In particular, disclosed is a stator winding arrangement for a stator of a generator, whereas the stator winding arrangement is composed of three electric circuits arranged in parallel, and a multitude of phase rings which terminate the electric circuits of the stator winding arrangement, whereas a first coil of a first circuit of the first pole and a third coil of the first circuit of the first pole are connected with one phase ring, and the first coil of a third circuit of the second pole and a third coil of the third circuit of the second pole are connected with another phase ring. These both phase rings are short phase rings as the length of these phase rings is reduced due to a reduced connection distance from the turn ends to the terminals. Further examples of the invention are described in the dependent claims.

In an example of the invention a second electric coil of the second circuit of the first pole and a third electric coil of the first circuit of the first pole are connected with one phase ring, and a second electric coil of the second circuit of the second pole and a third electric coil of the third circuit of the second pole are connected with another phase ring.

In another example each electric circuit is composed of eight turns.

In a further example the stator winding arrangement generates a voltage with three phases.

In one example the first coil and the third coil of the both poles are connected with each one phase ring.

In another example each electric circuit is composed of eight turns.

In a further example a second electric coil of the second circuit of each pole is connected from one pole to another pole.

In another example a second coil of each pole is connected from one pole to another pole.

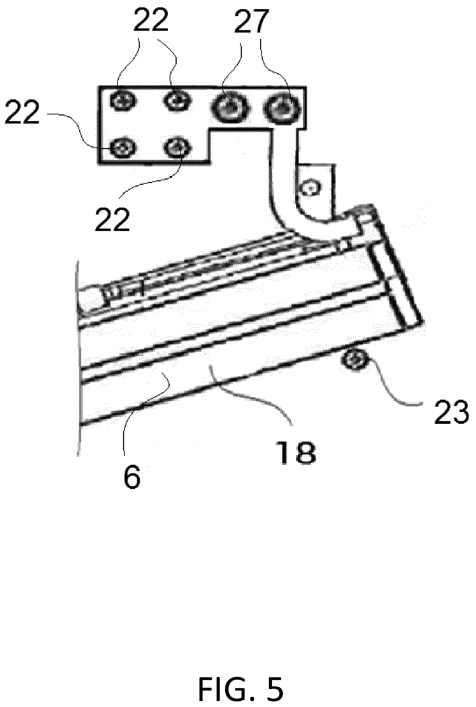

In a further example thirty-one phase rings are provided to terminate and inter-connect the electric circuits, these are seven phase rings per phase as can be seen in Fig. 5. Thirty-one phase rings means phase ring sections of around 60° to count for total length and needed space and loss assessment. This equals thirty-nine phase ring sections because of double connections which have to be counted twice for twice current and losses to compare to a state of the art solution having 51 phase ring sections.

In another example the stator winding arrangement is designed to create two poles or a multiple of two poles.

### BRIEF DESCRIPTION OF THE DRAWINGS

Further characteristics and advantages will be more apparent from the description of a preferred but non-exclusive embodiment of the stator winding arrangement, illustrated by way of non-limiting example in the accompanying drawings, in which:
- Fig. 1: shows a schematic side view of a turbogenerator with a foundation including a stator with a stator core with slots housing a stator winding, and a rotor body inside the stator;
- Fig. 2: shows a schematic front view of a stator core with exemplary slots and a stator bore inside the stator core;
- Fig. 3: shows a schematic side view of a cut part of an end winding with an exemplary turn bend and twelve phase ring positions to accommodate the coil connections;

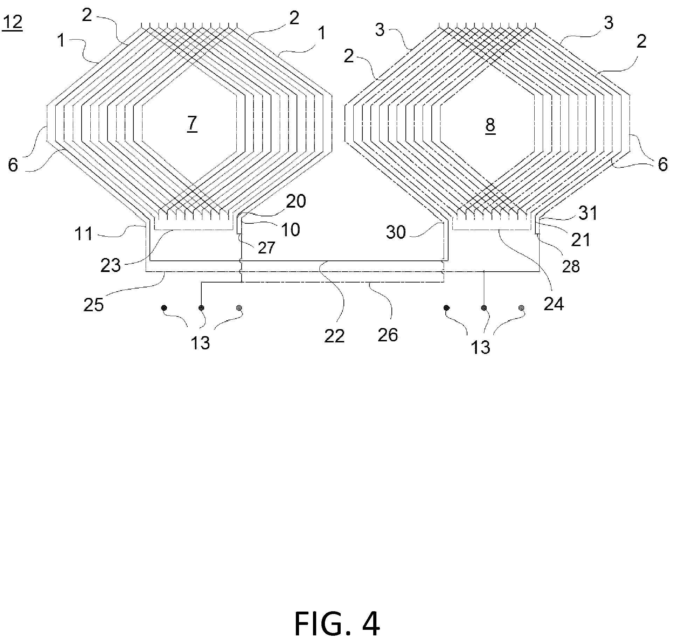

- Fig. 4: shows a schematic view of a stator winding arrangement with two poles and one of three phases with turns forming three parallel circuits, at the first pole the first circuit and the second circuit are connected with one double phase ring, on the same pole the inter-coil single connection and the single connection back to the terminal of the first circuit and the pole to pole single connection of the second circuit. At the second pole the second circuit and the third circuit are connected with another phase ring, on the same pole the inter-coil single connection and the single connection back to the terminal of the third circuit and again the pole to pole single connection of the second circuit;
- Fig. 5: shows a schematic view of a cut part of an end winding similar to Fig. 3, according to an exemplary arrangement of an end winding and a phase ring to accommodate seven phase rings.

### DETAILED DESCRIPTION OF EXEMPLARY EMBODIMENTS

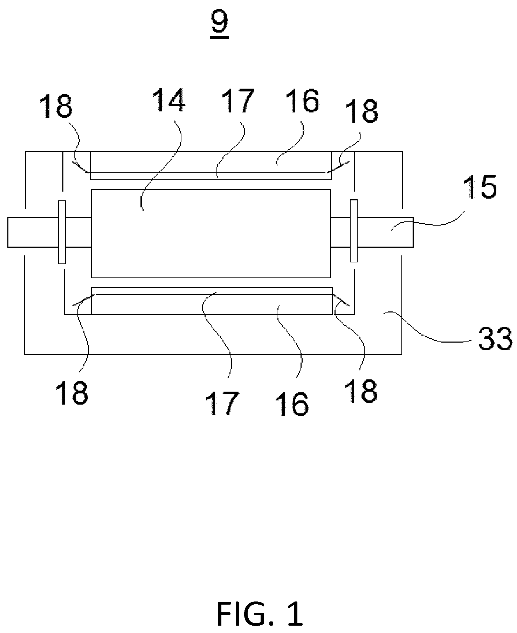

Fig. 1 shows a schematic side view of a common turbogenerator 9. The turbogenerator 9 is housed in a massive foundation 33 which carries the heavy parts of the turbogenerator 9. The turbogenerator 9 is mainly composed of a stator with a laminated stator core 16 which encompasses a rotor with a rotor body 14. The rotor body 14 rotates around a rotor shaft 15 in operation mode. In the stator core 16 a multitude of stator slots 17 are punched to house the stator winding or stator coils. The stator winding is commonly composed of copper bars which comprise transposed copper wires. Shown in Fig. 1 in a schematic way are end parts of the stator winding projecting beyond the stator slots 17, referred to as end windings 18. The stator winding or coils commonly serve for the induction of high voltages which constitute the output voltages of the turbogenerator 9.

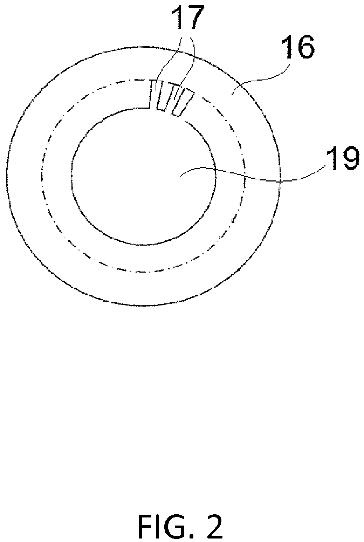

Fig. 2 shows a schematic front view of a stator core 16 similar to the stator core 16 of Fig. 1 with two exemplary slots 17 punched in the stator core 16 along the whole length. The actual number of slots 17 is higher and the slots 17 are distributed along the inside of the stator core 16, e.g. 36, 54, 72 or 90 slots 17. The number of slots 17 depends on the chosen design of the turbogenerator 9 and the corresponding stator winding. The stator core 16 encloses a free space inside, the stator bore 19 to house the rotor body 14.

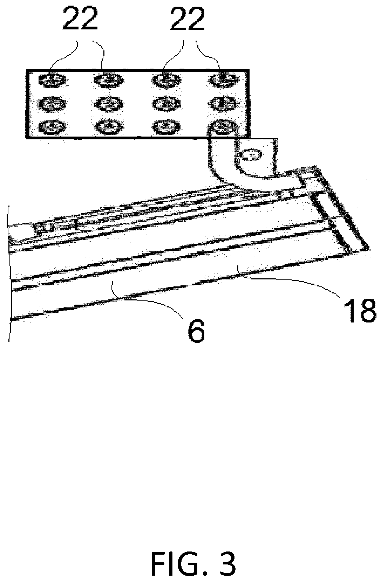

Fig. 3 shows a schematic side view of a cut part of an end winding 18. The shown end piece of the end winding 18 projects out of a slot 17 of the stator core 16. The end winding 18 comprises several turns 6. In Fig. 3, one connecting phase ring reaching from the end winding 18 to a phase ring 22 is shown exemplary. The phase rings 22 are fixed to a frame 34. For each phase a triple connection from terminals 13 to a first pole 7, a triple series connection from the first pole 7 to a second pole 8, and a triple connection of the second pole 8 back to the terminals 13 is arranged in the state of the art. Instead of a triple connection with three individual conductors from the terminals 13 to the winding, one single large connection or a double connection together with a single one could as well be used. The series connection between the poles has to be made as a triple one with three individual conductors in any case. Several phase rings 22-28 are arranged in a similar manner, in a conventional arrangement of a stator winding the total length of the phase rings corresponds to 51 phase ring sections of 60°. The number of necessary phase ring sections is reduced according to the invention as described by means of a stator winding arrangement 12 of Fig. 4. The phase rings 22-28 are connected to the electric terminals 13 of the stator to transfer the generated electric power.

Fig. 4 shows a schematic view of a stator winding arrangement 12 according to an example of the invention. Shown is a plurality of turns 6 of conductor bars which form the stator winding. The turns 6 are housed in slots 17 when the turbogenerator 9 is assembled. Each turn 6 consists of two conductor bars. The complete assembled stator winding arrangement 12 with three phases establishes a turbogenerator 9 with two poles 7,8, a first pole 7 and a second pole 8. The stator winding arrangement 12 comprises three parallel circuits 1,2,3, a first circuit 1 shown with dotted lines, a second circuit 2 shown with continuous lines, and a third circuit 3 shown with chain-dotted lines. Each of the three parallel circuits 1,2,3 contains eight turns 6. The first circuit 1 is completely assigned to the first pole 7, the second circuit 2 is half assigned to the first pole 7 and half assigned to the second pole 8, and the third circuit 3 is completely assigned to the second pole 8. As can be seen in Fig. 4 the first circuit 1 and the second circuit 2 are arranged at the left first pole 7. The second circuit 2 and the third circuit 3 are arranged at the right second pole 8. A phase ring 27 is shown schematically at the first pole 7 which connects a first circuit start 10 with a second circuit start 20. Another phase ring 28 is shown schematically at the second pole 8 which connects a first circuit end 21 with a third circuit end 31. The short phase rings 23 and 24 of first pole 7 and of second pole 8 inter-connecting circuit 1 and circuit 3 respectively are important features of the invention. In the state of the art these two connections are associated with a change of the pole 7,8. Further, another phase ring 22 connects the second circuit 2 of the first pole 7 with the second circuit 2 of the second pole 8. A phase ring 25 connects the first circuit end 11 to the terminals 13 together with the second circuit end 21 and the third circuit end 31 of the second pole 8. Further, the third circuit start 30 is connected via a phase ring 26 to the terminals 13 together with the first circuit start 10 and the second circuit start 20 of the first pole 7. The connections of the coils to the circuit starts 10,20,30, the circuit ends 11,21,31, and the phase rings 22,23,24 here is as follows. A first coil is connected to the first circuit start 10, the phase ring 23, which is the first circuit inter-connection, and the first circuit end 11. A second coil is connected to the second circuit start 20, the phase ring 22, which is the second pole to pole circuit connection, and the second circuit end 21. A third coil is connected to the third circuit start 30, the phase ring 24, which is the third circuit inter-connection, and the third circuit end 31. The phase ring 23, the first circuit connection, and the phase ring 24, the third circuit connection, are different to common arrangements. The phase rings 23, 24 form a basic change in the stator winding arrangement 12 according to this disclosure. By means of the phase rings 22-28 as described above, the total length of the phase rings 22-28 can be reduced significantly. Moreover, the number of phase rings 22-28 can be reduced if parallel circuits are put together at phase beginnings and ends. The number of 60 degree phase ring sections in a standard arrangement is 51, compared to the number of 39 phase ring sections of 60 degrees in this disclosure (phase rings carrying the current of two parallel circuits counted twice). The given numbers 51 and 39 depend on the exact position of the terminals with regard to the different phase belts of the winding. In addition it is assumed that the group of three terminals 13 to the star point and the group of three terminals 13 to the high voltage side are positioned 180 degree apart. This leads to a smaller end casing which encloses the end windings 18 of the stator winding arrangement 12. The end casing can be designed in a more compact manner. In addition the electrical losses at the phase rings 22-18 decrease as the total length of the phase rings 22-28 decreases. For sake of clarity only one phase of the three phases of the stator winding arrangement 12 is illustrated in Fig. 4, the remaining two phases are connected in the same manner. This is the reason why in Fig. 4 only one terminal 13 for each pole 7,8 is occupied. The other two terminals 13 are connected to the not shown two phases accordingly.

Fig. 5 shows a schematic view of a cut part of an end winding 18 similar to Fig. 3. Here, phase rings 22, 27 according to an exemplary arrangement of an end winding 18 are shown. Here, the phase rings 22 are representative for phase rings 22-26, the phase rings 27 are representative for phase rings 27, 28. The phase rings 22, 27 are fixed to the frame 34 again. Compared to the state of the art according to Fig. 3 the number of the maximum phase ring positions is reduced to seven compared to twelve of Fig. 3. Five of the phase rings 22-26 carry a regular basic current, two phase rings 27 carry a double current as these receive current from two turns 6. The short inter-coil phase ring 23, which is representative for short inter-coil phase rings 23,24, is arranged below the end winding 18 in an example.

The stator winding arrangement 12 can as well be applied to four pole generators or to machines having any higher number of pole pairs. Each pair of poles 7,8 can be connected in the described manner. The pole pairs can be connected in series or in parallel to the terminals 13 forming in this way for four pole generators either three or six parallel stator winding circuits respectively. In general the concept of the stator winding arrangement 12 can be applied forming in total a multitude of three according to the integer factors of the number of the pole pairs. In all pole pairs three parallel circuits 1,2,3, triples, are arranged in the two pole machine. The triples are connectable in series or in parallel. The number of the pole pair connections in series multiplied with the number of pole pair connections in parallel is the number of pole pairs of the machine. For example when 28 poles with 14 pole pairs are given it is possible to design three, six, 21, or 42 parallel circuits 1,2,3.

While the invention has been described in detail with reference to exemplary embodiments thereof, it will be apparent to one skilled in the art that various changes can be made, and equivalents employed, without departing from the scope of the invention. The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents.

### REFERENCE NUMBERS

- 1: first circuit with inter-coil phase ring inside one pole
- 2: second circuit with inter-coil phase ring from pole to pole
- 3: third circuit with inter-coil phase ring inside one pole phase ring carrying the current of two parallel circuits
- 6: turn
- 7: first pole
- 8: second pole
- 9: turbogenerator
- 10: first circuit start
- 11: first circuit end
- 12: stator winding arrangement
- 13: terminal
- 14: rotor body
- 15: rotor shaft
- 16: stator core
- 17: stator slot
- 18: end windings
- 19: stator bore
- 20: second circuit start
- 21: second circuit end
- 22: phase ring, second (pole to pole) circuit connection
- 23: phase ring, first circuit inter-connection
- 24: phase ring, third circuit inter-connection
- 25: phase ring, single connection of first circuit
- 26: phase ring, single connection of third circuit
- 27: phase ring carrying the current of two parallel circuits
- 28: phase ring carrying the current of two parallel circuits
- 30: third circuit start
- 31: third circuit end
- 33: foundation
- 34: frame

## Claims

1. Stator winding arrangement (12) for a stator of a generator, whereas the stator winding arrangement (12) is composed of three electric circuits (1,2,3) arranged in parallel, and a multitude of phase rings (22-28) which terminate the electric circuits (1,2,3) of the stator winding arrangement (12), whereas a third electric coil of the first circuit (1) and a first electric coil of the first circuit (1) of a first pole (7) are inter-connected with a phase ring (23), and a third electric coil of the third circuit (3) and a first electric coil of the third circuit (3) of a second pole (8) are inter-connected with another phase ring (24).

2. The stator winding arrangement (12) according to claim 1, **characterized in that** a second electric coil of the second circuit (2) of the first pole (7) and a third electric coil of the first circuit (1) of the first pole (7) are connected with one phase ring (27), and a second electric coil of the second circuit (2) of the second pole (8) and a third electric coil of the third circuit (3) of the second pole (8) are connected with another phase ring (28).

3. The stator winding arrangement (12) according to one of the foregoing claims, **characterized in that** a second coil of each pole (7,8) is connected from one pole (7) to another pole (8).

4. The stator winding arrangement (12) according to one of the foregoing claims, **characterized in that** each electric circuit (1,2,3) is composed of eight turns (6).

5. The stator winding arrangement (12) according to one of the foregoing claims, **characterized in that** a second electric coil of the second circuit (2) of each pole (7,8) is connected from one pole (7) to another pole (8).

6. The stator winding arrangement (12) according to one of the foregoing claims, **characterized in that** the stator winding arrangement (12) generates a voltage with three phases.

7. The stator winding arrangement (12) according to one of the foregoing claims, **characterized in that** thirty-one phase rings segments of 60 degree are provided to terminate the electric circuits (1,2,3).

8. The stator winding arrangement (12) according to one of the foregoing claims, **characterized in that** the stator winding arrangement (12) is designed to create two poles (7,8) or a multiple of two poles (7,8).

9. A turbogenerator (9) with a stator core (16) equipped with a stator winding arrangement (12) according to claim 1.

10. A turbogenerator (9) according to claim 9 having more than one pole pair, whereas for each pole pair the said same stator winding arrangement (12) is arranged.
